# EUROPEAN PATENT APPLICATION

(11) **EP 4 631 755 A1**
(43) Date of publication of application: **15.10.2025**
(21) Application number: 24169216.9
(22) Date of filing: 09.04.2024
(51) Int. Cl.: B60K 1/04, B60K 15/07, B60K 15/063

(54) **HOOK SUSPENDED ENERGY STORAGE MODULE**

(71) Applicant: VOLVO TRUCK CORPORATION, 405 08 Göteborg (SE)
(72) Inventor: LANDVIK, Sondre, 417 61 GÖTEBORG (SE)
(74) Representative: Kransell & Wennborg KB

(57) **Abstract**

The present disclosure relates to an energy storage arrangement (1) for a vehicle (100), the energy storage arrangement comprising a first energy storage module (10) comprising a first surface (23), and at least one hook member (24) arranged on the first surface, and a second energy storage module (30) comprising a first wall (43) and a second wall (44), the first and second walls being transversally offset from each other, and a first chassis connecting member (45) arranged on the first wall, wherein the second energy storage module is suspendable to a frame (110) of the vehicle by the first chassis connecting member, wherein the at least one hook member (24) is hooked on a portion of the first wall of the second energy storage module to suspend the first energy storage module to the second energy storage module.

## Description

### TECHNICAL FIELD

The disclosure relates generally to energy storage arrangements. In particular aspects, the disclosure relates to a hook suspended energy storage module. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged to position and assemble these energy storage systems to the frame of the heavy duty vehicle.

### SUMMARY

According to a first aspect of the disclosure, there is provided an energy storage arrangement for a vehicle, the energy storage arrangement comprising a first energy storage module comprising a first surface, and at least one hook member arranged on the first surface, and a second energy storage module comprising a first wall and a second wall, the first and second walls being transversally offset from each other, and a first chassis connecting member arranged on the first wall, wherein the second energy storage module is suspendable to a frame of the vehicle by the first chassis connecting member, wherein the at least one hook member is hooked on a portion of the first wall of the second energy storage module to suspend the first energy storage module to the second energy storage module.

The first aspect of the disclosure may seek to at least partly mitigate the problem of difficult and time consuming connection of energy storage modules to a frame of the vehicle. A technical benefit may include that an energy storage arrangement with at least two energy storage modules is provided which is easily and efficiently connected to each other. The energy storage arrangement of the first aspect may thus be relatively simple to connect and disconnect to/from the frame of the vehicle. In particular, and for assembling of a plurality of energy storage modules on an assembly line, the present solution may enable a simple and safe assembly of the energy storage arrangement. The first aspect may furthermore facilitate removal of the energy storage modules upon service.

The above described energy storage arrangement thus comprises a first and a second energy storage module which are individually suspendable to the frame, where the first energy storage module is suspendable to the frame via the second energy storage module. The first and second energy storage modules are thus configured to be suspended to the frame by connecting the first chassis connecting member of the second energy storage module to the frame and to hook the at least one hook member of the first energy storage module to the portion of the first wall of the second energy storage module. Put it differently, the first energy storage module may be supported at one of its sides, i.e. at the first surface, by the at least one hook member hanging on the second energy storage module. Accordingly, the second energy storage module is configured to be suspended to the frame, whereby the first energy storage module may be configured to be more or less cantilevered to the second energy storage module, i.e. the at least one hook member may be configured to support at least a substantial part of the weight of the first energy module when it is suspended to the second energy module.

Optionally in some examples, including in at least one preferred example, the second energy storage module comprises a second chassis connecting member arranged on the second wall, the second energy storage module being suspendable to the frame of the vehicle by the second chassis connecting member. A technical benefit may include that an even further secured suspension of the second energy storage module can be obtained. Since the first energy storage module is hooked to the second energy storage module, also the suspension of the first energy storage module may be even further secured.

Optionally in some examples, including in at least one preferred example, the portion of the first wall to which the at least one hook member is hooked is arranged at a top edge of the first wall. A technical benefit may include, as will be described in further detail below, may be that the first energy storage module can be disconnected from the second energy storage module by simply moving the first energy storage module in an upward vertical direction relative to the second energy storage module. When connecting the first energy storage module to the second energy storage module, the first energy storage module may only be lowered to the second energy storage module. Thus, a simplified connection and disconnection of the first energy storage module to/from the second energy storage module may be obtained.

Optionally in some examples, including in at least one preferred example, the first energy storage module comprises a first module support frame, the first surface forming part of the first module support frame. A technical benefit may include that the first energy storage module can be well protected within the first module support frame.

Optionally in some examples, including in at least one preferred example, the first energy storage module comprises a first traction battery provided with a first plurality of battery cells, the first traction battery being housed in the first module support frame. A technical benefit may include that the first traction battery can be inserted into the first module support frame and subsequently hook the at least one hook member to the first wall of the second energy storage module, which may simplify the handling of the first energy storage module at e.g. an assembly line.

Optionally in some examples, including in at least one preferred example, the second energy storage module comprises a second module support frame, the first and second walls forming part of the second module support frame. A technical benefit may include that the second energy storage module can be well protected within the second module support frame.

Optionally in some examples, including in at least one preferred example, the second energy storage module comprises a second traction battery provided with a second plurality of battery cells, the second traction battery being housed in the second module support frame. A technical benefit may include that the second traction battery can be inserted into the second module support frame, whereby the second module support frame can subsequently be connected to the frame, which may simplify the handling of the second energy storage module at e.g. an assembly line.

Optionally in some examples, including in at least one preferred example, the second energy storage module comprises a support member configured to support the second traction battery to the second module support frame.

Optionally in some examples, including in at least one preferred example, the second traction battery is releasable from the second module support frame by detaching the support member from the second module support frame and moving the second traction battery in a downward direction away from the portion of the first wall to which the at least one hook member is hooked. A technical benefit may include that the second traction battery can be released without unhooking the first energy storage module from the second energy storage module. Hence, maintenance of the second energy storage module, and in particular the second traction battery may be simplified. It should be observed that the release of the second traction battery as described above is obviously achievable with a traction battery that does not comprise a plurality of battery cells, i.e. also for other types of traction batteries.

Optionally in some examples, including in at least one preferred example, the first chassis connecting member comprises a bottom end attached to the first wall, and a top end comprising a chassis connection interface connectable to the frame of the vehicle, the first chassis connecting member extending between the bottom end and the top end.

Optionally in some examples, including in at least one preferred example, the at least one hook member is formed such that the first energy storage module is removable from the second energy storage module by moving the first energy storage module in an upward direction away from a bottom side of the second energy storage module. As indicated above, a technical benefit may include that a simplified connection and disconnection of the first energy storage module to/from the second energy storage module may be obtained. In particular, the first energy storage module may be disconnected from the second energy storage module by simply moving the first energy storage module in a vertical upward direction relative to the second energy storage module.

Optionally in some examples, including in at least one preferred example, the energy storage arrangement comprises a first rod arranged in a transversally arranged first through hole of the first energy storage module and connected to the second energy storage module. A technical benefit may include that the first and second energy storage module may be secured to each other in a reliable and efficient manner. The fact that the first energy storage module is suspended onto the second energy storage module by the at least one hook member facilitates the subsequent connection of the first and second energy storage modules with the first rod.

Optionally in some examples, including in at least one preferred example, the first rod extends from a second surface of the first energy storage module to the first surface, the second surface being arranged transversally offset from the first surface.

Optionally in some examples, including in at least one preferred example, the first rod is attached to an aperture in the second energy storage module.

Optionally in some examples, including in at least one preferred example, the energy storage arrangement further comprises a third energy storage module arranged at an opposite position of the second energy storage module compared to the position of the first energy storage module. A technical benefit may include that the vehicle may be provided with an even larger energy supply to be fed to an electric traction motor, thereby increasing the operational range for the vehicle. The third energy storage module may be an electric traction battery or a fuel tank. In the latter example, the fuel tank may contain hydrogen fuel to be fed to a fuel cell accommodated in the vehicle and arranged to generate electric energy.

Optionally in some examples, including in at least one preferred example, the energy storage arrangement further comprises a bracket assembly comprising one or more support elements, the bracket assembly is configured to suspend the third energy storage module to the frame. A technical benefit may include that the third energy storage module may be securely connected to the frame.

Optionally in some examples, including in at least one preferred example, at least two hook members are arranged on the first surface of the first energy storage module.

According to a second aspect, there is provided a vehicle, comprising a frame and an energy storage arrangement according to any one of the preceding claims, wherein the energy storage arrangement is suspended to the frame.

According to a third aspect, there is provided a method of assembling an energy storage arrangement to a frame of a vehicle, the method comprising: suspending a second energy storage module to the frame of the vehicle by connecting a first chassis connecting member of the second energy storage module to the frame, and suspending a first energy storage module to the second energy storage module by hooking a hook member arranged on a first surface of the first energy storage module to a portion of a first wall of the second energy storage module. A technical benefit may include that a simple assembly process can be obtained, thereby reducing the workload at an assembly line. It should be understood that the second energy storage module may be suspended to the frame as a first step, and to subsequently suspend the first energy storage module to the second energy storage module. However, the first energy storage module may equally as well be suspended to the second energy storage module before the second energy storage module is suspended to the frame.

Optionally in some examples, including in at least one preferred example, the method further comprising: guiding a first rod through a first through hole of the first energy storage module and into a second though hole of the second energy storage module, connecting a first end portion of the first rod in the aperture, and connecting a second end portion of the first rod to a second surface of the first energy storage module, the second surface being laterally offset from the first surface.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an energy storage arrangement according to an example,
Figs. 3a - 3b are enlarged views of sections of the energy storage arrangement according to Fig. 2 according to an example,
Fig. 4 is an exemplary illustration of an energy storage arrangement according to an example,
Fig. 5 is an exemplary illustration of an energy storage arrangement according to an example,
Fig. 6 is an exemplary illustration of an energy storage arrangement according to an example,
Fig. 7 is a flowchart of the method according to an example as disclosed herein, and
Figs. 8a - 8d are exemplary illustrations of a method of assembling an energy storage arrangement according to an example.

### DETAILED DESCRIPTION

The detailed description set forth below provides information and examples of the disclosed technology with sufficient detail to enable those skilled in the art to practice the disclosure.

The following disclosure aims at mitigating the problem of difficult and time consuming connection of energy storage modules to a frame of a vehicle. A technical benefit of the following disclosure may be that an energy storage arrangement with at least two energy storage modules is provided which is easily and efficiently connected to each other.

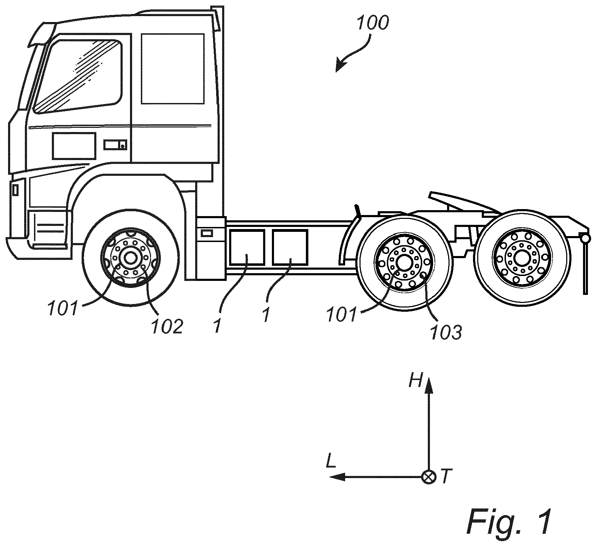

Turning to Fig. 1, which is an exemplary illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprises a single electric traction motor connected to the wheels via a conventional propulsion shaft (not shown). The at least one electric traction motor 101 is configured to apply a propulsive power to the wheels of the vehicle during propulsion, and to generate electric power during braking.

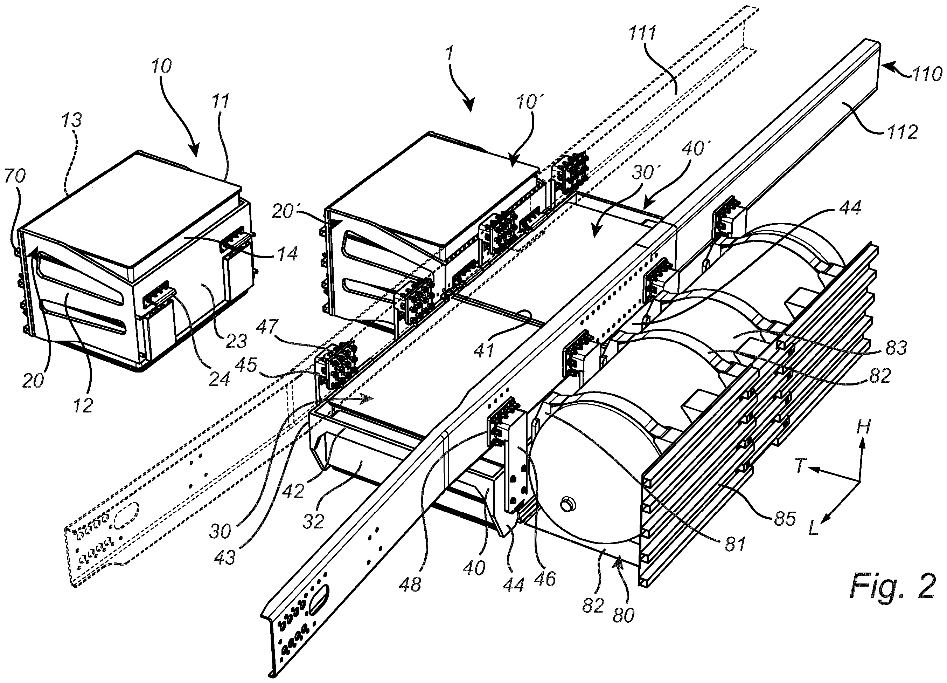

The vehicle 100 further comprises an energy storage arrangement 1, which may comprise an energy storage system which may also be referred to as a high-voltage vehicle battery. The energy storage arrangement 1 may in addition to the high-voltage vehicle battery comprise a fuel tank, such as a H₂ fuel tank. The energy storage arrangement 1 is configured to feed electric power to the electric traction motor 101 during propulsion of the vehicle 100 and to receive electric power during braking. In order to describe the connection of the energy storage arrangement 1 to the frame of the vehicle 100, reference is now made to Figs. 2-6.

Turning initially to Fig. 2 which is an exemplary illustration of an energy storage arrangement according to an example. The energy storage arrangement extends in a longitudinal direction L, a transverse direction T and a height direction H. The energy storage arrangement 1 comprises a first energy storage module 10 and a second energy storage module 30.

The first energy storage module 10 comprises a first surface 23 arranged to face a frame 110 of the vehicle 100. In particular, the frame 110 may be formed by a first 111 and a second 112 longitudinally extending frame rail, whereby the first surface 23 may advantageously face the longitudinally extending frame rail 111. The first energy storage module 10 further comprises a second surface 13 arranged transversally offset from the first surface 23. In addition, the exemplified first energy storage module 10 comprises a first 11 and second 12 transversally extending surface. The first 11 and second 12 transversally extending surfaces each extend from the first surface 23 to the second surface 13. The first energy storage module 10 may thus be a substantially cubically shaped first energy storage module 10.

According to the example depicted in Fig. 2, the first energy storage module 10 may comprise a first traction battery 14 provided with a first plurality of battery cells (not shown). In addition, the first energy storage module 10 may comprise a first module support frame 20. The above described first surface 23, the second surface 13, the first transversally extending surface 11 and the transversally extending surface second 12 may form part of the first module support frame 20. The first traction battery 14 may thus be housed/accommodated in the first module support frame 20. As depicted in Fig. 2, the first energy storage module 10 may also comprise an outer longitudinally extending protection plate 70 arranged on the second surface 13. The outer longitudinal side protection 70 may be made of a resistant material, such as a metal material, for example steel.

Furthermore, the first energy storage module 10 comprises a hook member 24. The hook member 24 is arranged on the first surface 23. In the example depicted in Fig. 2, the first energy storage module 10 comprises a pair of hook members 24 arranged on the first surface 23 and arranged longitudinally offset from each other. In the example depicted in Fig. 2, the hook member(s) is arranged on the first surface 23 forming part of the first module support frame 20. It should however be readily understood that the hook member(s) may be arranged on a surface of the first traction battery 14 for an implementation lacking the first module support frame 20. The hook member 24 and its purposes will be described in further detail below.

As described above, the energy storage arrangement 1 comprises a second energy storage module 30. The second energy storage module 30 comprises a first wall 43 and a second wall 44. The first 43 and second 44 walls are arranged transversally offset from each other. As depicted in Fig. 2, the second energy storage module 30 is positioned between, and slightly below, the first 111 and second 112 longitudinally extending frame rails of the frame 110. In particular, the first wall 43 is arranged in the vicinity of the first longitudinally extending frame rail 111 and the second wall 44 is arranged in the vicinity of the second longitudinally extending frame rail 112. The second energy storage module 30 exemplified in Fig. 2 may also comprise a first 41 and a second 42 transversally extending wall. The first 41 and second 42 transversally extending walls extends from the first wall 43 to the second wall 44.

According to the example depicted in Fig. 2, the second energy storage module 30 may comprise a second traction battery 32 provided with a plurality of battery cells (not shown). Also, the second energy storage module 30 may comprise a second module support frame 40. In such implementation, the above described first wall 43, second wall 44 and at least the second transversally extending wall 42 may here form part of the second module support frame 40. The second traction battery 32 may hereby be housed/accommodated in the second module support frame 40.

Furthermore, the second energy storage module 30 also comprises a first chassis connecting member 45. The first chassis connecting member 45 is arranged on the first wall 43 of the second energy storage module 30 and arranged to connect the second energy storage module 30 to the frame 110. In particular, the first chassis connecting member 45 is connected to the first longitudinally extending frame rail 111 at a chassis connection interface 47 of the first chassis connecting member 45. The chassis connection interface 47 may be connected to the first longitudinally extending frame rail 111 by one or more screws or bolts. In the example depicted in Fig. 2, the second energy storage module 30 comprises a pair of first chassis connecting members 45 arranged longitudinally offset from each other.

In a similar vein, the second energy storage module 30 exemplified in Fig. 2 also comprises a second chassis connecting member 46 arranged on the second wall 44. In the exemplification, the second energy storage module 30 comprises a pair of second chassis connecting members 46, which are arranged longitudinally offset from each other. The second chassis connecting member 46 is arranged to connect the second energy storage module 30 to the second longitudinally extending frame rail 112 at a chassis connection interface 48 of the second chassis connecting member 46. The chassis connection interface 48 of the second chassis connecting member 46 may be connected to the second longitudinally extending frame rail 112 by one or more screws or bolts. Accordingly, in the example depicted in Fig. 2, the second energy storage module 30 is suspended to the frame 110 by the first 45 and second 46 chassis connecting members.

Furthermore, the energy storage arrangement 1 exemplified in Fig. 2 comprises a third energy storage module 83. The third energy storage module 83 and the first energy storage module 10 are arranged on a respective opposite side of the second energy storage module 30 as seen in the transverse direction T. The third energy storage module 83 is exemplified as a fuel tank but can alternatively be an additional electric traction battery. When the third energy storage module 83 is a fuel tank, such fuel tank may be provided with hydrogen gas that can be fed to a fuel cell (not shown) of the vehicle 1, which fuel cell generates electric energy to be fed to e.g. the first 10 and/or second 30 energy storage modules, or alternatively direction to the electric traction motor 101 depicted in Fig. 1.

Furthermore, the energy storage arrangement 1 may further comprise a bracket assembly 80 configured to support the third energy storage module 83. In particular, the bracket assembly 80 comprises one or more support elements 82, which in Fig. 2 are exemplified as straps enclosing the third energy storage module 83. The bracket assembly 80 is configured to suspend the third energy storage module 83 to the frame 110, preferably to the second longitudinally extending frame rail 112. As will be described in further detail below, the bracket assembly 80 may comprise an inner side 81 with a hook member arranged to suspend the third energy storage module 83 to the second energy storage module 30, thus connecting the third energy storage module 83 to the second longitudinally extending frame rail 112 via the second energy storage module 30. Furthermore, the bracket assembly also comprises an outer longitudinal side protection 85 arranged on a transversally opposite side of the third energy storage module 83 compared to the position inner side 81 of the bracket assembly 80. The outer longitudinal side protection 85 may be made of a resistant material, such as a metal material, for example steel.

As is further exemplified in Fig. 2, the energy storage arrangement 1 may additionally comprise an additional first energy storage module 10' and an additional second energy storage module 30'. The additional first energy storage module 10' is preferably arranged in a similar or same manner as the above described first energy storage module 10. As exemplified in Fig. 2, the first energy storage module 10 and the additional first energy storage module 10' are arranged side by side with each other along the longitudinal direction L. The additional first energy storage module 10' may thus, for example, comprise a hook member 24 in a similar vein as the first energy storage module 10 and comprise a module support frame 20' in which an additional first traction battery is housed/accommodated. The additional second energy storage module 30' may be similar/same as the second energy storage module 30 and arranged side by side with the second energy storage module 30 along the longitudinal direction. The additional second energy storage module 30' may thus comprise an additional second module support frame 40' in which an additional second traction battery is housed/accommodated. The second energy storage module may further comprise similar chassis connecting member(s) as described above in relation to the second energy storage module 30 for connection to the frame 110.

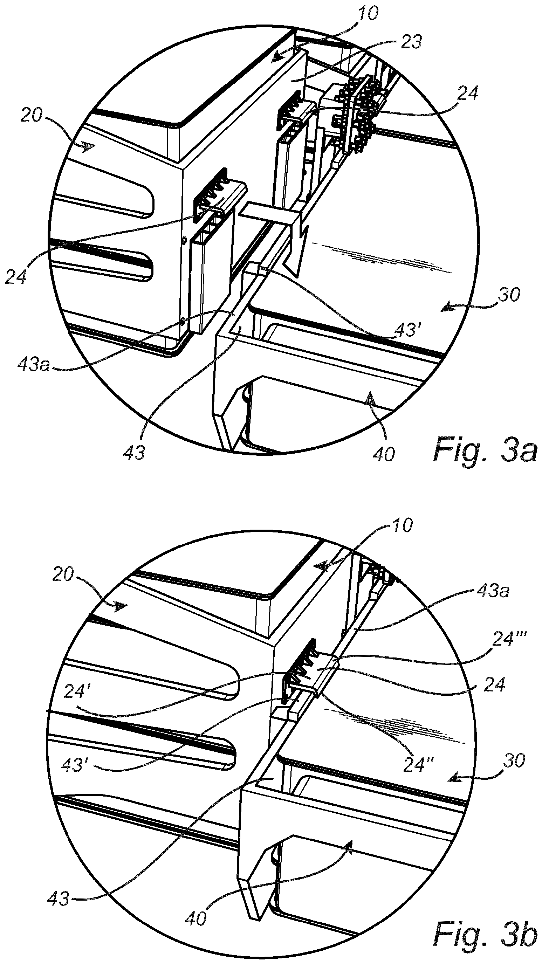

Turning to Figs. 3a - 3b which are enlarged detailed views of sections of the energy storage arrangement according to Fig. 2 according to an example. In particular, the illustrations in Figs. 3a - 3b presents a detailed example of the above described hook member 24 of the first energy storage module 10. As described above, the hook member 24 is arranged on the first surface 23 of the first energy storage module 10. The hook member 24 comprises a first portion 24' protruding transversally from the first surface 23, and a second portion 24" protruding vertically downward from an outer end 24'" of the first portion 24'. Put it differently, the hook member 24 is bent at the outer end 24‴ to thereby form the hook shape.

As can be seen in the examples depicted in Figs. 3a - 3b, the first energy storage module 10 is suspended to the second energy support module 30 by hooking the hook member 24 to a portion 43' of the first wall 43 of the second energy storage module 30. The portion 43' of the first wall 43 may preferably be arranged at a top edge 43 of the first wall 43. In further detail, the portion 43' of the first wall 43 may be a protruding portion that protrudes in a vertical direction from the top edge 43 of the first wall 43. The first energy support module 10 may hereby hang on the second energy storage module 30. As will be further described below, the first energy storage module 10 is thus suspended to the second energy storage 30 by hooking the hook member 24 to the portion 43' of the first wall 43 of the second energy storage module 30. The first energy storage module 10 can subsequently be removed from the second energy storage module 30 by moving the first energy storage module 10 in an upwards, i.e. vertical, direction.

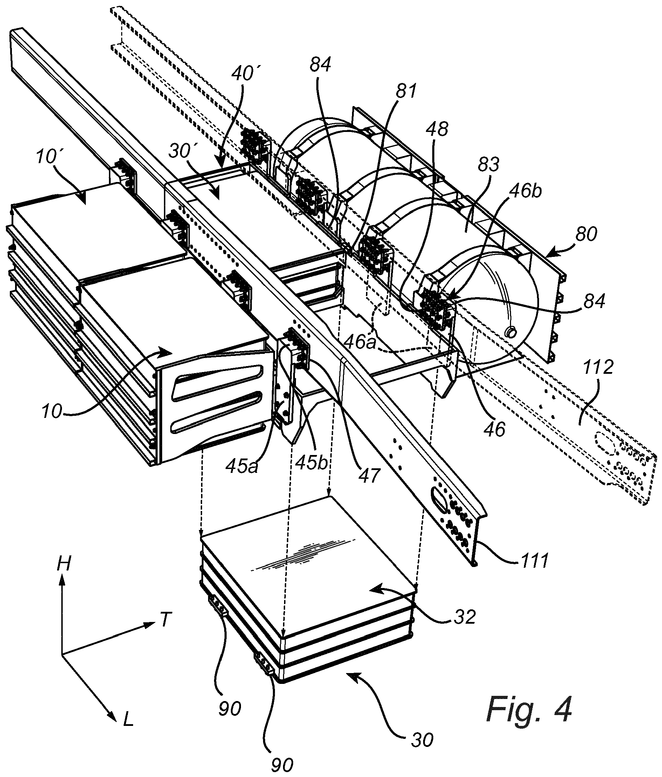

Reference is made to Fig. 4 which is an exemplary illustration of the energy storage arrangement 1 according to an example. As described above, the energy storage arrangement 1 comprises a bracket assembly 80. As is illustrated in further detail in Fig. 4, the bracket assembly 80 comprises the above mentioned hook member 84 arranged in the inner side 81 of the bracket assembly 80. As can be seen in Fig. 4, the hook member 84 is connected to a portion of the second energy storage module 30 in a similar manner as the connection of the first energy storage module 10 to the second storage module 30. By means of the hook member 84, the third energy storage module 83 can thus be suspended to the second energy storage module 30.

As also depicted in Fig. 4, the first chassis connecting member 45 comprises a bottom end 45a and a top end 45b. Hence, the first chassis connecting member 45 extends from the bottom end 45a to the top end 45b. The bottom end 45a is attached to the first wall 43 of the second energy storage module 30 while the top end 45b is attached to the first longitudinally extending frame rail 111 at the above described chassis connection interface 47. As can be seen in Fig. 4, the second chassis connecting member 46 may also comprise a bottom end 46a and a top end 46b in a similar vein as the first chassis connecting member 45. Also, the top end 46b of the second chassis connecting member 46 comprises a chassis connection interface 48 for connecting the second chassis connecting member 46 to the second longitudinally extending frame rail 112.

Moreover, the second energy storage module 30 comprises a support member 90. In the exemplification depicted in Fig. 4, the support member 90 is a pair of support members 90 arranged on the second traction battery 32 of the second energy storage module 30. The support member 90 is configured to support the second traction battery 32 to the second module support frame 40. By the support member 90, the second traction battery 32 can be released from the second module support frame 40. In particular, by releasing the support member 90 from the second module support frame 40, the second traction battery 32 can be detached from the second module support frame 40 and moved in e.g. a vertically downward direction as depicted in Fig. 4. According to an example, the support member 90 is attached to a surface of the second traction battery 32 and releasably connectable to the second module support frame 40 by e.g. screws or bolt, although other attachment elements are conceivable.

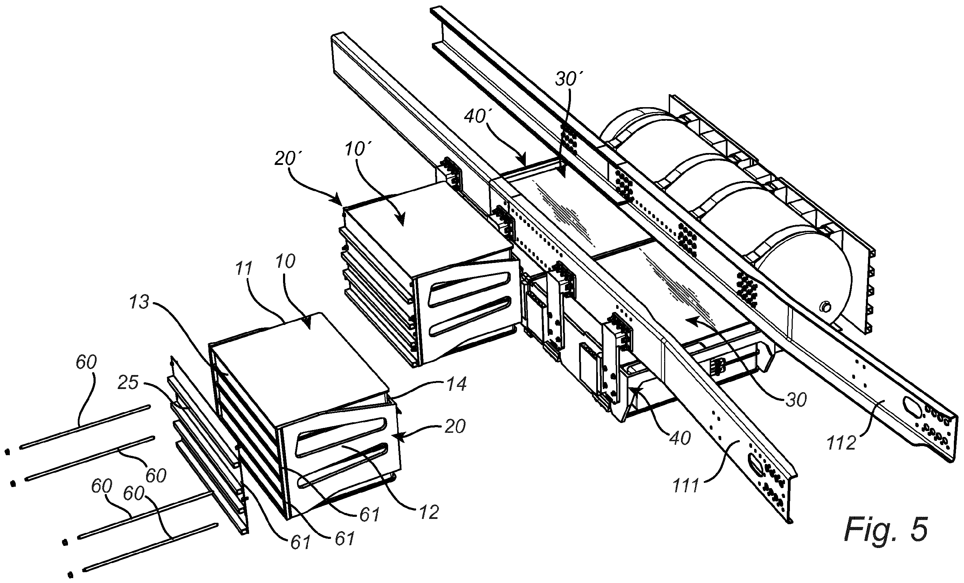

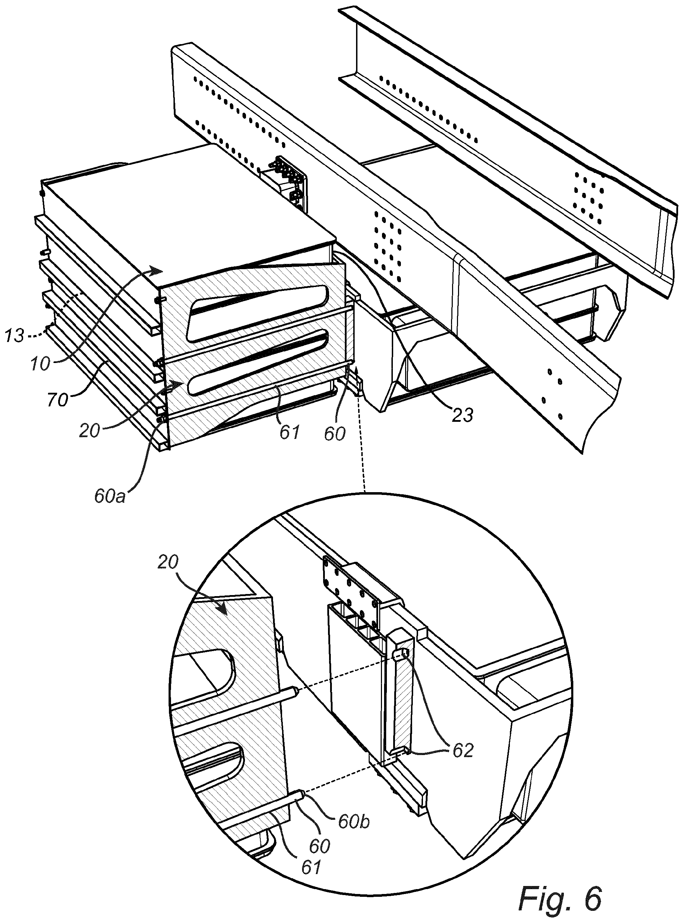

In order to describe a further example of the energy storage arrangement 1, reference is made to Figs. 5 and 6, which are exemplary illustrations of the energy storage arrangement 1 according to an example. In detail, the energy storage arrangement 1 exemplified in Figs. 5 and 6 comprises a first rod 60. The exemplified energy storage arrangement 1 comprises a plurality of first rods 60. The first rod 60 is arranged in a transversally arranged first through hole 61 of the first energy storage module 10. In the exemplification of Figs. 5 and 6, the first through hole 61 is arranged in the first module support frame 20 of the first energy storage module 10. As can be seen in detail in Fig. 6, the first rod 60 extends from the second surface 13 of the first energy storage module 10 to the first surface 23. The first rod 60 is further connected to the second energy storage module 30. In detail, the first rod 60 may be attached to an aperture 62 of the second energy storage module 30. The aperture 62 may be a second through hole arranged in the second module support frame.

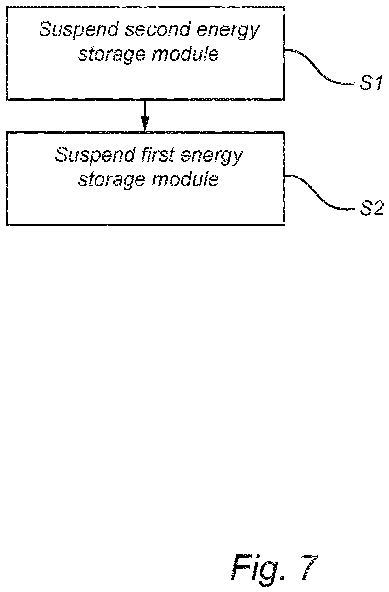

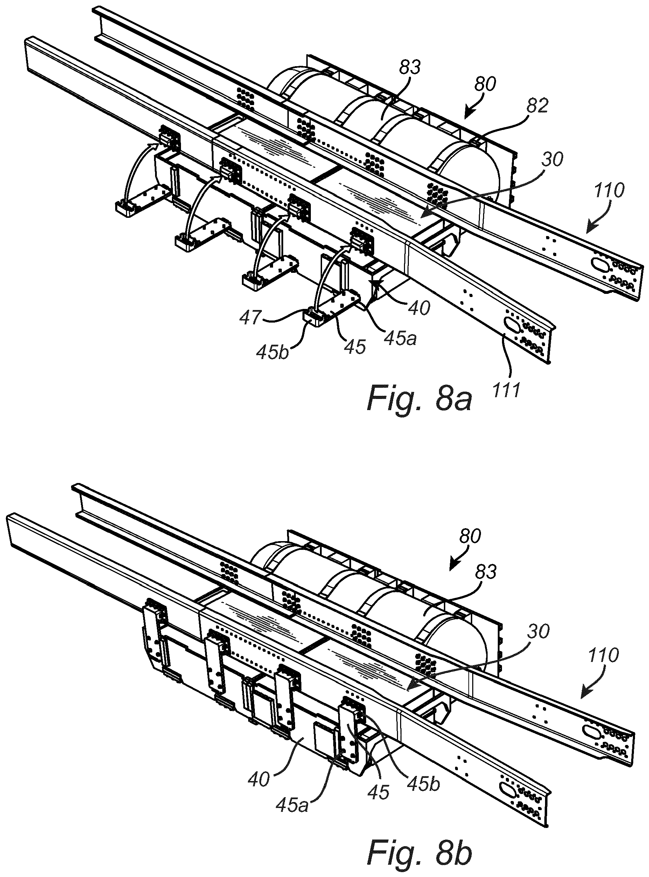

In order to describe a method of assembling the energy storage arrangement 1 to the frame 110 of the vehicle, reference is made to Fig. 7 in combination with Figs. 8a - 8d. Fig. 7 is a flow chart of an exemplified method of assembling the energy storage arrangement 1 while Figs. 8a - 8d are exemplary illustrations of the method of assembling the energy storage arrangement 1 according to an example.

During assembly, the second energy storage module 30 is suspended S1 to the frame 110 of the vehicle 10. In particular, the second energy storage module 30 is suspended to the frame 30 by connecting the first chassis connecting member 45 of the second energy storage module 30 to the frame 110. Additionally, the second chassis connecting member 46 may also be connected to the frame 110.

As exemplified in Fig. 8a, the first chassis connecting member 45 may be hingedly connected to the second energy storage module 30. Although not illustrated, this may apply also for the second chassis connecting member 46. Hereby, before connection to the frame 110, the first 45 and second 46 chassis connecting members can be arranged to assume a first state as indicated in Fig. 8a in which the first 45 and second 46 chassis connecting members are arranged in an opened position. The second energy storage module 30 can be arranged in its intended position relative to the frame 110, whereby the first 45 and second 46 chassis connecting members are pivoted to assume a second state in which the first 45 and second 46 chassis connecting members are arranged in a closed position where the chassis connection interface 47 can connect to the frame 110 as illustrated in Fig. 8b.

As can be seen in the example of Fig. 8a, the third energy storage module 83 has been suspended to the second energy storage module 30 as described above before the second energy storage module 30 is connected to the frame 30. It should however be readily understood that the third energy storage module 83 may be suspended to the second energy storage module 30 at a later point in time, i.e. after the second energy storage module 30 is suspended to the frame 110.

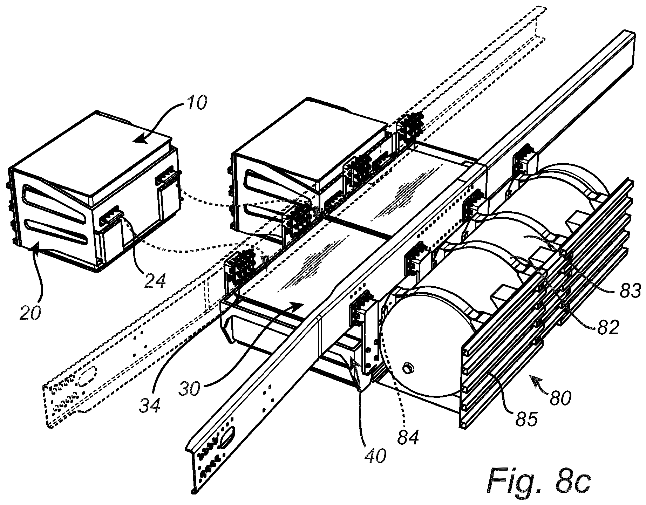

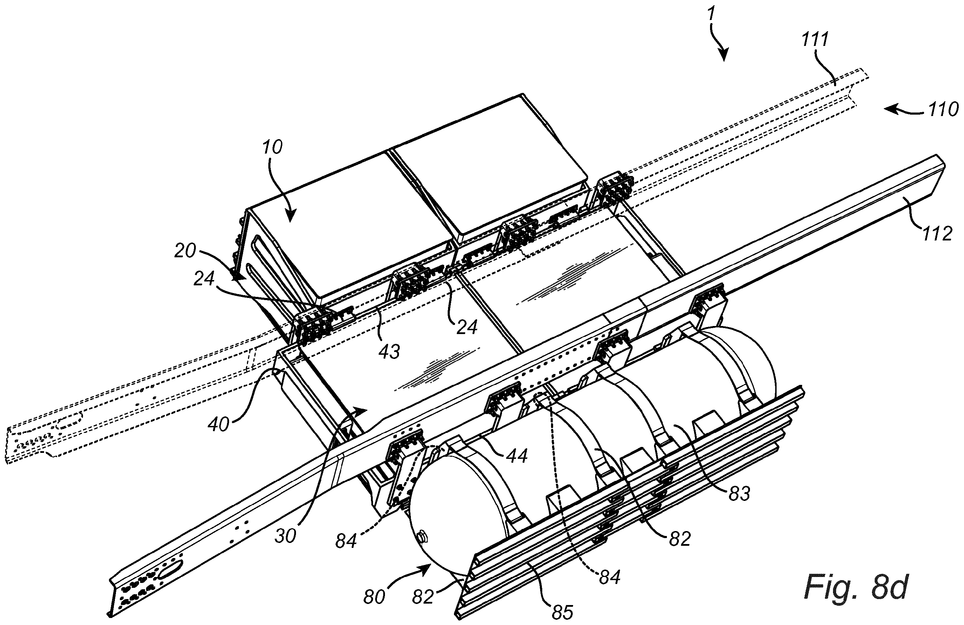

When the second energy storage module 30 is suspended to the frame 110, the first energy storage module 10 is suspended S2 to the second energy storage module 30. In particular, and as can be seen in Fig. 8c, the first energy storage module 10 is suspended to the second energy storage module 30 by hooking the hook member 24 to the portion of the first wall of the second energy storage arrangement 30, which has been described in detail above. When the first energy storage module 10 is suspended to the second energy storage module 30, the energy storage arrangement 1 assumes its assembled configuration as depicted in Fig. 8d.

In order to further secure the connection of the first energy storage module 10 to the second energy storage module 30, the method may optionally be followed by guiding the first rod 60 through the first through hole 61 of the first energy storage module 10 and into the aperture 62 of the second energy storage module 30 as depicted in Fig. 6. A first end portion 60b of the first rod 60 may be connected to the aperture 62 of the second energy storage module 30. When the first rod 60 is connected to the aperture 62, a second end portion 60a of the first rod 60 can be connected to the second surface 13 of the first energy storage module 10. Preferably, a nut can be used for connecting the second end portion 60a to the second surface 13. In addition, the above described outer longitudinal side protection 70 can be sandwiched between the second surface 13 and the nut.

### EXAMPLE LIST

Example 1. An energy storage arrangement for a vehicle, the energy storage arrangement comprising: a first energy storage module comprising a first surface, and at least one hook member arranged on the first surface, and a second energy storage module comprising a first wall and a second wall, the first and second walls being transversally offset from each other, and a first chassis connecting member arranged on the first wall, wherein the second energy storage module is suspendable to a frame of the vehicle by the first chassis connecting member, wherein the at least one hook member is hooked on a portion of the first wall of the second energy storage module to suspend the first energy storage module to the second energy storage module.

Example 2. The energy storage arrangement of example 1, wherein the second energy storage module comprises a second chassis connecting member arranged on the second wall, the second energy storage module being suspendable to the frame of the vehicle by the second chassis connecting member.

Example 3. The energy storage arrangement of any one of examples 1 or 2, wherein the portion of the first wall to which the at least one hook member is hooked is arranged at a top edge of the first wall.

Example 4. The energy storage arrangement of any one of the preceding examples, wherein the first energy storage module comprises a first module support frame, the first surface forming part of the first module support frame.

Example 5. The energy storage arrangement of example 4, wherein the first energy storage module comprises a first traction battery provided with a first plurality of battery cells, the first traction battery being housed in the first module support frame.

Example 6. The energy storage arrangement of any one of the preceding examples, wherein the second energy storage module comprises a second module support frame, the first and second walls forming part of the second module support frame.

Example 7. The energy storage arrangement of example 6, wherein the second energy storage module comprises a second traction battery provided with a second plurality of battery cells, the second traction battery being housed in the second module support frame.

Example 8. The energy storage arrangement of example 7, wherein the second energy storage module comprises a support member configured to support the second traction battery to the second module support frame.

Example 9. The energy storage arrangement of example 8, wherein the second traction battery is releasable from the second module support frame by detaching the support member from the second module support frame and moving the second traction battery in a downward direction away from the portion of the first wall to which the at least one hook member is hooked.

Example 10. The energy storage arrangement of any one of the preceding examples, wherein the first chassis connecting member comprises a bottom end attached to the first wall, and a top end comprising a chassis connection interface connectable to the frame of the vehicle, the first chassis connecting member extending between the bottom end and the top end.

Example 11. The energy storage arrangement of any one of the preceding examples, wherein the at least one hook member is formed such that the first energy storage module is removable from the second energy storage module by moving the first energy storage module in an upward direction away from a bottom side of the second energy storage module.

Example 12. The energy storage arrangement of any one of the preceding examples, wherein the energy storage arrangement comprises a first rod arranged in a transversally arranged first through hole of the first energy storage module and connected to the second energy storage module.

Example 13. The energy storage arrangement of example 12, wherein the first rod extends from a second surface of the first energy storage module to the first surface, the second surface being arranged transversally offset from the first surface.

Example 14. The energy storage arrangement of any one of examples 12 and 13, wherein the first rod is attached to an aperture in the second energy storage module.

Example 15. The energy storage arrangement of any one of the preceding examples, wherein the energy storage arrangement further comprises a third energy storage module arranged at an opposite position of the second energy storage module compared to the position of the first energy storage module.

Example 16. The energy storage arrangement of example 15, wherein the energy storage arrangement further comprises a bracket assembly comprising one or more support elements, the bracket assembly is configured to suspend the third energy storage module to the frame.

Example 17. The energy storage arrangement of any one of the preceding examples, wherein at least two hook members are arranged on the first surface of the first energy storage module.

Example 18. A vehicle, comprising a frame and an energy storage arrangement according to any one of the preceding examples, wherein the energy storage arrangement is suspended to the frame.

Example 19. A method of assembling an energy storage arrangement to a frame of a vehicle, the method comprising: suspending a second energy storage module to the frame of the vehicle by connecting a first chassis connecting member of the second energy storage module to the frame, and suspending a first energy storage module to the second energy storage module by hooking a hook member arranged on a first surface of the first energy storage module to a portion of a first wall of the second energy storage module.

Example 20. The method of example 19, further comprising: guiding a first rod through a first through hole of the first energy storage module and into an aperture of the second energy storage module, connecting a first end portion of the first rod in the aperture, and connecting a second end portion of the first rod to a second surface of the first energy storage module, the second surface being laterally offset from the first surface.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage arrangement (1) for a vehicle (100), the energy storage arrangement comprising:
- a first energy storage module (10) comprising a first surface (23), and at least one hook member (24) arranged on the first surface, and
- a second energy storage module (30) comprising a first wall (43) and a second wall (44), the first and second walls being transversally offset from each other, and a first chassis connecting member (45) arranged on the first wall, wherein the second energy storage module is suspendable to a frame (110) of the vehicle by the first chassis connecting member, wherein the at least one hook member (24) is hooked on a portion (43') of the first wall of the second energy storage module to suspend the first energy storage module to the second energy storage module.

2. The energy storage arrangement (1) of claim 1, wherein the second energy storage module (30) comprises a second chassis connecting member (46) arranged on the second wall (44), the second energy storage module being suspendable to the frame of the vehicle by the second chassis connecting member.

3. The energy storage arrangement (1) of any one of claims 1 or 2, wherein the portion (43') of the first wall (43) to which the at least one hook member (24) is hooked is arranged at a top edge (43a) of the first wall.

4. The energy storage arrangement (1) of any one of the preceding claims, wherein the first energy storage module (10) comprises a first module support frame (20), the first surface (23) forming part of the first module support frame (20).

5. The energy storage arrangement (1) of any one of the preceding claims, wherein the second energy storage module (30) comprises a second module support frame (40), the first (43) and second (44) walls forming part of the second module support frame (40).

6. The energy storage arrangement (1) of claim 5, wherein the second energy storage module (30) comprises a second traction battery (32) provided with a second plurality of battery cells, the second traction battery being housed in the second module support frame.

7. The energy storage arrangement (1) of claim 6, wherein the second energy storage module (30) comprises a support member (90) configured to support the second traction battery (32) to the second module support frame (40).

8. The energy storage arrangement (1) of claim 7, wherein the second traction battery is releasable from the second module support frame (40) by detaching the support member (90) from the second module support frame (40) and moving the second traction battery (32) in a downward direction away from the portion of the first wall to which the at least one hook member is hooked.

9. The energy storage arrangement (1) of any one of the preceding claims, wherein the at least one hook member (24) is formed such that the first energy storage module (10) is removable from the second energy storage module (30) by moving the first energy storage module (10) in an upward direction away from a bottom side of the second energy storage module (30).

10. The energy storage arrangement (1) of any one of the preceding claims, wherein the energy storage arrangement (1) comprises a first rod (60) arranged in a transversally arranged first through hole (61) of the first energy storage module (10) and connected to the second energy storage module (30).

11. The energy storage arrangement (1) of any one of the preceding claims, wherein the energy storage arrangement (1) further comprises a third energy storage module (83) arranged at an opposite position of the second energy storage module (30) compared to the position of the first energy storage module (10).

12. The energy storage arrangement (1) of claim 11, wherein the energy storage arrangement (1) further comprises a bracket assembly (80) comprising one or more support elements(82), the bracket assembly is configured to suspend the third energy storage module to the frame (110).

13. A vehicle (10), comprising a frame (110) and an energy storage arrangement (1) according to any one of the preceding claims, wherein the energy storage arrangement (1) is suspended to the frame (110).

14. A method of assembling an energy storage arrangement (1) to a frame (110) of a vehicle (10), the method comprising:
- suspending (S 1) a second energy storage module (30) to the frame (110) of the vehicle (10) by connecting a first chassis connecting member (45) of the second energy storage module (30) to the frame (110), and
- suspending (S2) a first energy storage module (10) to the second energy storage module (30) by hooking a hook member (24) arranged on a first surface of the first energy storage module (10) to a portion of a first wall of the second energy storage module.

15. The method of claim 14, further comprising:
- guiding a first rod (60) through a first through hole (61) of the first energy storage module (10) and into an aperture (62) of the second energy storage module (30),
- connecting a first end portion (60b) of the first rod (60) in the aperture (62), and
- connecting a second end portion (60a) of the first rod (60) to a second surface of the first energy storage module (10), the second surface being laterally offset from the first surface.
